# EUROPEAN PATENT APPLICATION

(11) **EP 4 618 255 A1**
(43) Date of publication of application: **17.09.2025**
(21) Application number: 24877471.3
(22) Date of filing: 07.10.2024
(51) Int. Cl.: H01M 10/658, H01M 10/04, H01M 50/244, H01M 50/204

(54) **BATTERY MODULE HAVING FLAME PREVENTION STRUCTURE, AND BATTERY PACK COMPRISING SAME**

(30) Priority: 10.10.2023 KR 20230133961
(71) Applicant: LG Energy Solution, Ltd., Seoul 07335 (KR)
(72) Inventor: JU, Eunah, Daejeon 34122 (KR); LEE, Minbok, Daejeon 34122 (KR); LEE, Sunjung, Daejeon 34122 (KR)
(74) Representative: BCKIP Part mbB
(86) International application number: PCT/KR2024/015167
(87) International publication number: WO 2025/079933

(57) **Abstract**

A battery module may include a battery cell stack in which a plurality of battery cells are stacked, a module case configured to accommodate the battery cell stack, a first end plate disposed on one side of the module case, and a first flame prevention member disposed on the first end plate to suppress flame exposure to an outside of the battery module.

## Description

### [TECHNICAL FIELD]

The present disclosure relates to a battery module and a battery pack including the battery module, and more specifically, to a battery module having a flame prevention structure in which flames are suppressed from being exposed to the outside when a thermal runaway occurs in the battery module, and a battery pack including the battery module.

### [BACKGROUND ART]

Unlike primary batteries, which cannot be recharged, secondary batteries refer to batteries that may be charged and discharged, and they are applied not only to portable devices but also to electric vehicles ("EVs") and hybrid vehicles ("HEVs") that are driven by an electrical drive source.

Types of secondary batteries currently in wide use may include lithium ion batteries, lithium polymer batteries, nickel cadmium batteries, nickel hydrogen batteries, and nickel zinc batteries. An operating voltage of such a unit secondary battery cell, that is, a unit battery cell, is approximately 2.5 V to 4.6 V. Accordingly, when a higher output voltage is required, a battery pack is formed by connecting multiple battery cells in series. Additionally, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

When configuring a battery pack by connecting a plurality of battery cells in series/parallel, generally, a battery module consisting of at least one battery cell, or a plurality of battery cells, is first constructed, and a battery pack is constructed by using at least one such battery module and adding other components. Here, the battery module refers to a component in which multiple battery cells are connected in series or parallel, and the battery pack refers to a component in which multiple battery modules are connected in series or parallel to increase capacity, output and the like.

The battery module is configured by electrically connecting multiple cells using a busbar.

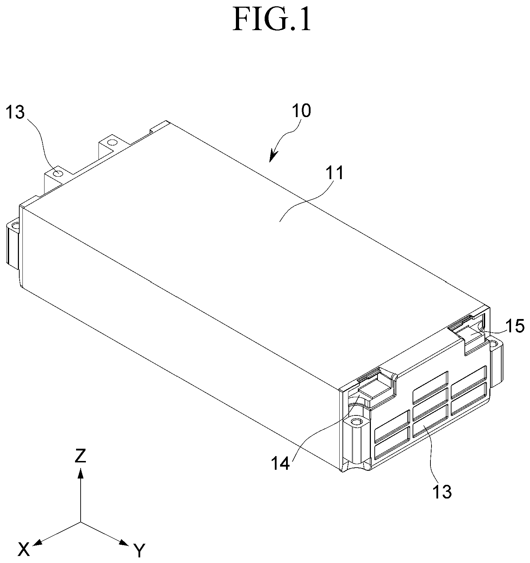

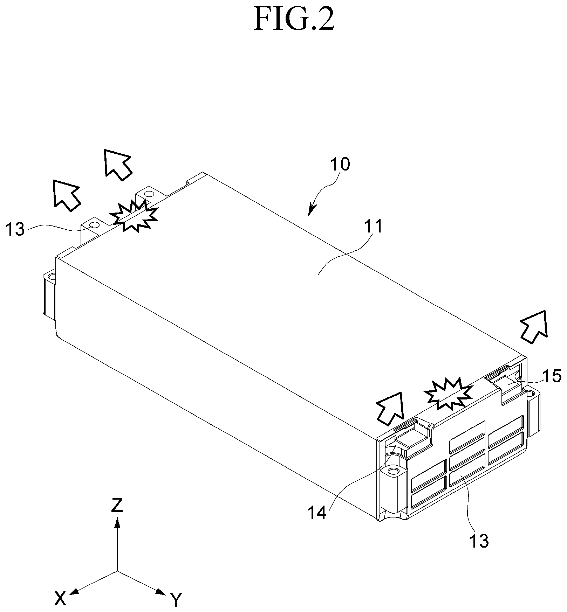

Such a battery module of the related art is illustrated in FIGS. 1 and 2. A battery module 10 illustrated in FIG. 1 includes a battery cell stack, a module case 11 accommodating the battery cell stack, a busbar frame disposed on a front and/or rear surface of the battery cell stack, and an end plate 13 and a terminal busbar 15 disposed on the front and rear surface of the module case 11.

The battery cell stack may include a plurality of electrically connected battery cells stacked along one direction and housed in the module case 11. The busbar frame is disposed on the front and/or rear surface of the battery cell stack. The battery cells in the battery cell stack may be pouch-type battery cells.

The battery cell stack may be housed in the module case 11, and the end plates 13 may be coupled to the front and rear surface of the module case 11 to cover the front and rear surface of the module case 11.

The terminal busbar 15 is for electrically connecting one battery module 10 to another battery module 10, and a portion of the terminal busbar 15 may be exposed to the outside of the end plate 13 so as to be connected to another battery module 10.

However, in such a battery module 10, there is a problem that flames may be exposed through an insulating cover 14 or the end plate 13 that are vulnerable to high temperatures during thermal runaway (see FIG. 2).

### [DESCRIPTION OF THE INVENTION]

### [TECHNICAL OBJECTIVES]

The present disclosure is intended to solve the problems described above and is directed to providing a battery module having a flame prevention structure in which flames are suppressed from being exposed to the outside when a thermal runaway occurs in the battery module, and a battery pack including the battery module.

### [TECHNICAL MEANS]

A battery module according to an embodiment of the present disclosure may include a battery cell stack in which a plurality of battery cells are stacked, a module case configured to accommodate the battery cell stack, a first end plate disposed on one side of the module case, and a first flame prevention member disposed on the first end plate to suppress flame exposure to an outside of the battery module.

Furthermore, the first flame prevention member may include a side portion disposed on the first end plate, and an upper portion bent from the side portion and disposed on an upper surface of the battery module.

Furthermore, the first flame prevention member may further include a fixing pin configured to fix the first flame prevention member to the battery module.

Furthermore, the side portion may include a coupling hole into which the fixing pin is inserted.

Furthermore, the fixing pin may be coupled to the first end plate.

Furthermore, the first end plate may include a module lifting hole configured to be used to lift the battery module, and the fixing pin may be coupled to the module lifting hole.

Furthermore, the coupling hole may be provided in plural and may be disposed on each opposite side of the side portion, and the fixing pin may be provided in plural and may be inserted into each coupling hole.

In addition, the first end plate may includes, on opposite sides, module lifting holes configured to be used to lift the battery module, and the fixing pin may be coupled to each of the module lifting holes.

Furthermore, the first end plate may include, on opposite sides, a module mounting portion configured to couple the battery module to a battery pack, and the module lifting hole may be formed in the module mounting portion.

Furthermore, the module mounting portion may include a coupling hole formed in an up and down direction.

Furthermore, the battery module may further include a second end plate disposed on another side of the module case, and a second flame prevention member disposed on the second end plate to suppress flame exposure to the outside of the battery module.

Furthermore, the second flame prevention member may include a side portion disposed on the second end plate, and an upper portion bent from the side portion and disposed on an upper surface of the battery module.

Furthermore, the second flame prevention member may further include a fixing pin configured to fix the second flame prevention member to the battery module.

Furthermore, the side portion of the second flame prevention member may include a coupling hole into which the fixing pin of the second flame prevention member is inserted.

Furthermore, the fixing pin of the second flame prevention member may be coupled to the second end plate.

Furthermore, the second end plate may include a module lifting hole configured to be used to lift the battery module, and the fixing pin may be coupled to the module lifting hole.

Furthermore, the coupling hole may be provided in plural and may be disposed on opposite sides of the side portion, and the fixing pin may be provided in plural and may be inserted into each coupling hole.

In addition, the second end plate may include, on opposite sides, module lifting holes configured to be used to lift the battery module, and the fixing pin may be coupled to each of the module lifting holes.

Furthermore, the second end plate may include, on opposite sides, a module mounting portion configured to couple the battery module to a battery pack, and the module lifting hole may be formed in the module mounting portion.

Furthermore, the module mounting portion may include a coupling hole formed in an up and down direction.

### [EFFECT OF THE INVENTION]

A battery module and a battery pack including a flame prevention structure according to the present disclosure may have the effect of suppressing flames from being exposed to the outside even if the flames occur in the battery module.

### [BRIEF DESCRIPTION OF THE DRAWINGS]

FIG. 1 is a perspective view illustrating a battery module of the related art,
FIG. 2 is a view illustrating flames occurring in the battery module of FIG. 1,
FIG. 3 is a perspective view illustrating a battery module according to the present disclosure,
FIG. 4 is a view illustrating a state in which a flame prevention sheet is separated in FIG. 3,
FIG. 5 is an exploded perspective view illustrating a battery module according to the present disclosure,
FIG. 6 is a perspective view illustrating a battery cell according to the present disclosure,
FIG. 7 is a perspective view illustrating a terminal busbar according to the present disclosure,
FIG. 8 is a perspective view illustrating an insulating cover and an end plate according to the present disclosure, and
FIG. 9 is a view illustrating inside of a battery pack according to the present disclosure.

### [MODES FOR IMPLEMENTING THE INVENTION]

The advantages and features of the present disclosure and methods for achieving them will become clear by referring to the embodiments described in detail below along with the accompanying drawings. However, the present disclosure is not limited to the embodiments disclosed below and will be implemented in various different forms, the present embodiments only serve to ensure that the disclosure of the present disclosure is complete, it is provided to fully inform those who have common knowledge in the technical field to which the present disclosure pertains, and the present disclosure is to be only defined by the scope of the claims. Accordingly, in some embodiments, well-known process steps, well-known device structures, and well-known techniques are not specifically described in order to avoid ambiguous interpretation of the present disclosure. Like reference numerals refer to like elements throughout the specification.

In order to clearly express multiple layers and areas in the drawing, the thickness may be enlarged. Throughout the specification, similar parts are given the same reference numerals. When a portion of a layer, film, region, plate and the like is said to be "on" another part, this includes not only being "directly on" another part, but also cases where there is another portion therebetween. Conversely, when a portion is said to be "directly on" another part, it means that there is no other portion therebetween. Additionally, when a portion of a layer, film, region, plate and the like is said to be "beneath" another part, this includes not only cases where it is "directly beneath" another part, but also cases where there is another portion therebetween. Conversely, when a portion is said to be "directly beneath" another part, it means that there is no other portion therebetween.

A battery module 1000 according to an embodiment of the present disclosure will be described in detail with reference to the drawings.

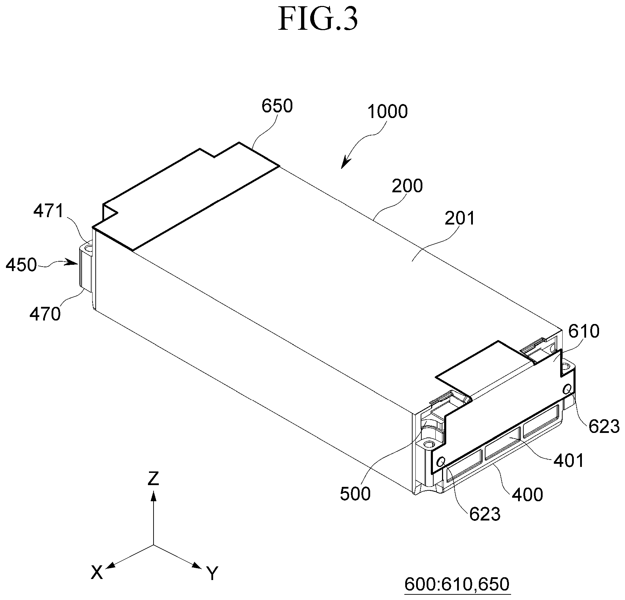

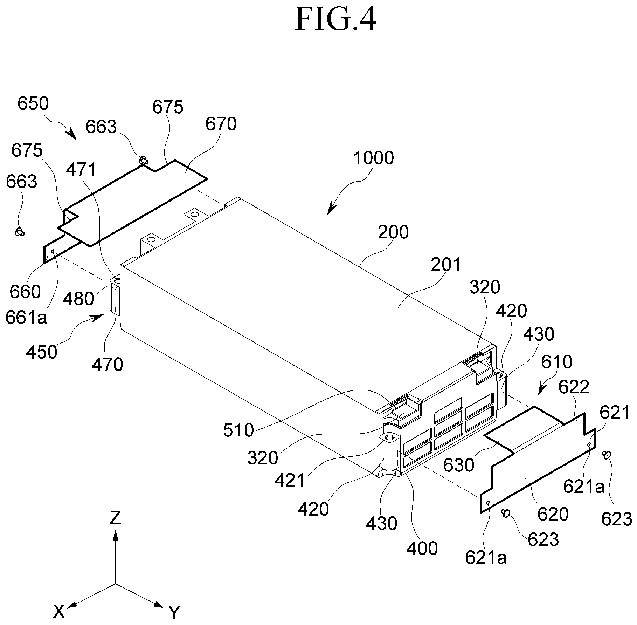

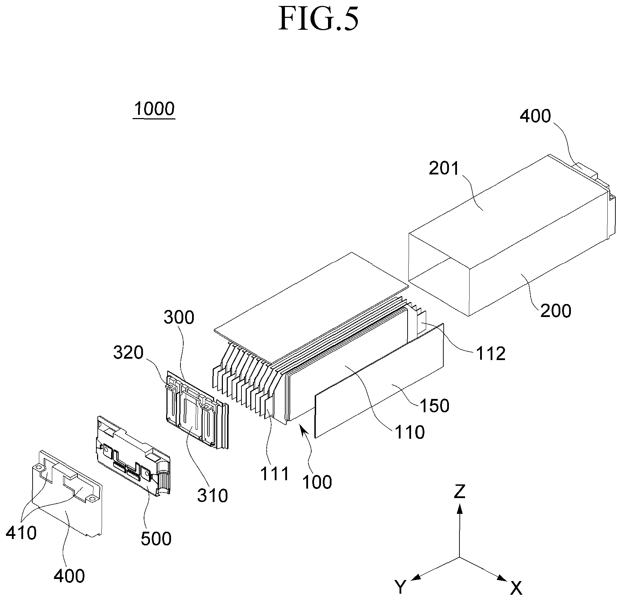

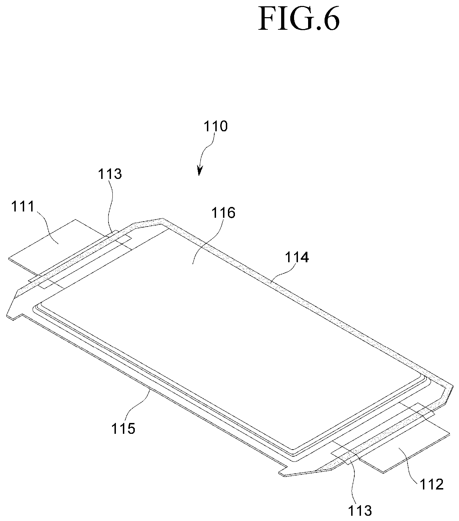

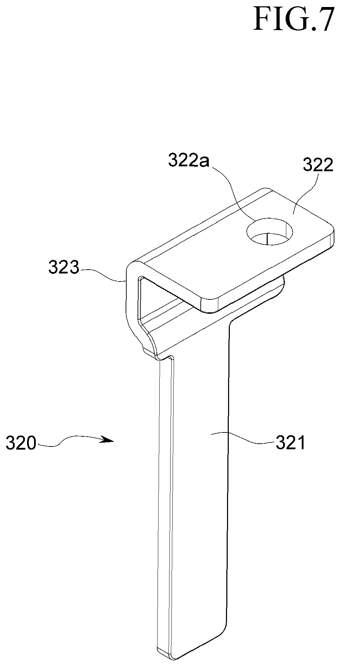

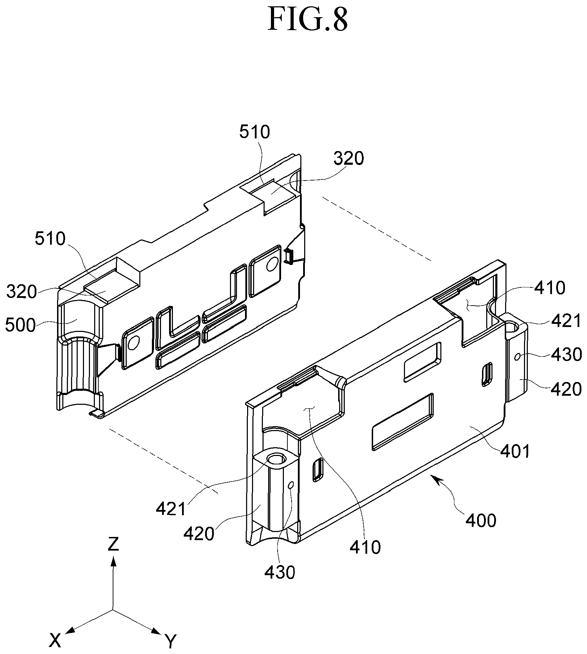

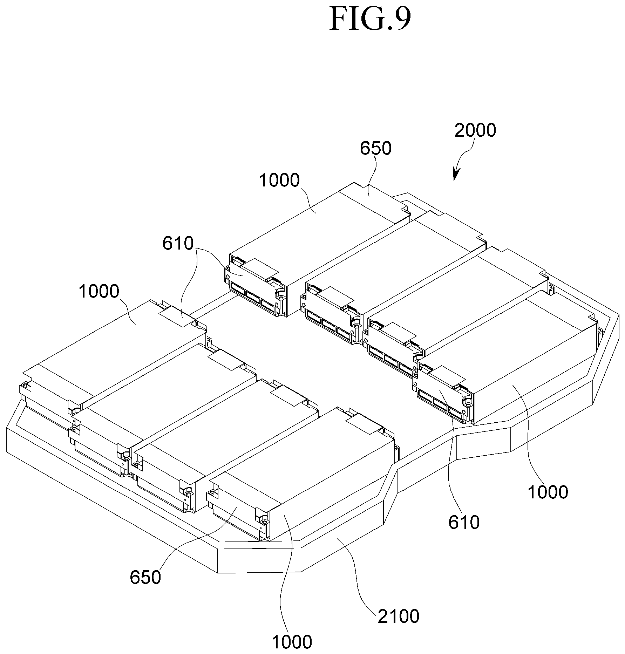

FIG. 3 is a perspective view illustrating a battery module according to the present disclosure, FIG. 4 is a view illustrating a state in which a flame prevention sheet is separated in FIG. 3, FIG. 5 is an exploded perspective view illustrating a battery module according to the present disclosure, FIG. 6 is a perspective view illustrating a battery cell according to the present disclosure, FIG. 7 is a perspective view illustrating a terminal busbar according to the present disclosure, FIG. 8 is a perspective view illustrating an insulating cover and an end plate according to the present disclosure, and FIG. 9 is a view illustrating an inside of a battery pack according to the present disclosure.

A battery module 1000 according to an embodiment of the present disclosure may include a battery cell stack 100 in which a plurality of battery cells 110 are stacked, a module case 200 configured to accommodate the battery cell stack 100, a busbar frame 300 disposed on a front and/or rear surface of the battery cell stack 100, end plates 400, 450 configured to cover the front and/or rear surface of the battery cell stack 100, and busbars 310, 320 and a flame prevention portion 600 mounted on the busbar frame 300.

The battery cell stack 100 may be formed by stacking the plurality of battery cells 110 along one direction, and the plurality of battery cells 110 may be electrically connected to each other. The direction in which the plurality of battery cells 110 are stacked may be an X-axis direction or a -X-axis direction in FIG. 5.

A direction from a front surface to a rear surface of the battery cell stack 100, or an opposite direction thereto, may be defined as a longitudinal direction of the battery cell stack 100, and may be a Y-axis direction in the drawing. In addition, a direction from an upper surface to a lower surface of the battery cell stack 100, or an opposite direction thereto, may be defined as a width direction of the battery cell stack 100, and may be a Z-axis direction in the drawing.

The longitudinal direction of the battery cell stack 100 may be substantially the same as a longitudinal direction of the battery cell 110. Electrode leads 111, 112 of the battery cell 110 may be disposed on the front surface and the rear surface of the battery cell stack 100, and the busbars 310, 320 of the battery module 1000 may be disposed close to the front surface and the rear surface of the battery cell stack 100 to readily form an electrical connection with the electrode leads 111, 112.

The battery cell 110 may be provided as a pouch-type battery cell, and the number of battery cells stacked per unit area may be maximized in the pouch-type battery cell. However, the battery cell 110 does not necessarily have to be provided in a pouch-type, and may be provided in a polygonal, cylindrical, or other various shapes.

The battery cell 110 provided in a pouch-type may include an electrode assembly and a cell case 115 accommodating the electrode assembly (see FIG. 6).

The cell case 115 of the battery cell 110 may be a pouch-type cell case 115 for accommodating the electrode assembly. The cell case 115 may include a lower case and an upper case covering the lower case, and the upper and lower cases may be formed unitarily as one piece. In addition, as illustrated in FIG. 4, connecting portions of the upper and lower cases may be formed in a structure in which they are bent and folded. In addition, as illustrated, the upper case may completely cover the lower case, and a sealing portion 114 may be formed in a peripheral area.

The upper and lower cases may both be formed in a laminate structure including an inner cover layer, a metal layer, and an outer cover layer. The inner cover layer which is located at the inner side the cell case 115 with respect to the metal layer may be required to have insulation and electrolytic resistance because it directly contacts the electrode assembly and to have sealing properties to be sealed from the outside, that is, a sealing portion where inner layers are thermally provided should have excellent thermal bonding strength. The metal layer located between the inner cover layer and the outer cover layer serves as a barrier layer that prevents moisture or various gases from penetrating into the battery from the outside, and a material for the metal layer in contact with the inner cover layer may use an aluminum (Al) thin film that is lightweight and has excellent formability. The outer cover layer is located at the outer side of the cell case 115 with respect to the metal layer, and the outer cover layer may use a heat-resistant polymer with excellent characteristics in terms of tensile strength, moisture permeability, and air permeability to protect the electrode assembly while ensuring heat resistance and chemical resistance, and for example, nylon or polyethylene terephthalate may be used.

An accommodation recess 116 may be formed in each of the upper and lower cases, and the electrode assembly may be accommodated in the accommodation recess 116 of the upper and lower cases.

The electrode assembly accommodated in the cell case 115 may be one of the group consisting of a jelly-roll type electrode assembly having a structure in which a separator is disposed between elongated sheet-shaped anode and cathode and then rolled up, a stack type electrode assembly consisting of unit cells having a structure in which rectangular anode and cathode are stacked with a separator disposed therebetween, a stack-folding type electrode assembly in which unit cells are rolled up by an elongated separator film, and a lamination-stack type electrode assembly in which unit cells are stacked with a separator disposed therebetween and provided to each other.

In addition, the electrode assembly may include two electrode tabs and two electrode leads 111, 112 connected to the electrode tabs, respectively, by a welding portion.

One electrode lead 111 or 112 of the two electrode leads 111, 112 may be an anode (positive) lead connected to an anode tab, and the other electrode lead 111 or 112 may be a cathode (negative) lead connected to a cathode tab.

A lead film 113 may be attached to each of the electrode leads 111, 112. The lead film 113 coupled to the electrode leads 111, 112 may be disposed between the electrode leads 111, 112 and the cell case 115 to prevent a short circuit from occurring between the electrode leads 111, 112 and the cell case 115 and to improve sealing force, thereby preventing leakage of an electrolyte and the like.

Although the two electrode leads 111, 112 are illustrated as being disposed on opposite sides of the electrode assembly, respectively, the two electrode leads 111, 112 may be disposed on only one side of the electrode assembly depending on the arrangement of the electrode tabs.

The module case 200 may be configured to protect the battery cell stack 100 and electrical components connected thereto from external physical impact, and the module case 200 may accommodate the battery cell stack 100 and the electrical components connected thereto in an internal space of the module case 200.

A structure of the module case 200 may vary, and for example, the structure of the module case 200 may be a mono-frame structure. Here, the mono-frame may be in the form of a metal plate in which an upper surface, a lower surface, and opposite side surfaces are unitarily formed. The mono-frame may be manufactured by extrusion molding. As another example, the module case 200 may have a structure in which a U-shaped frame and an upper plate upper surface 201 are coupled to each other. In the case of the structure in which the U-shaped frame and the upper plate are coupled to each other, the structure of the module case 200 may be formed by coupling the upper plate onto an upper side of the U-shaped frame which is a metal plate where a lower surface and opposite side surfaces are coupled to each other or unitarily formed, and each frame or plate may be manufactured by press molding. In addition, the structure of the module case 200 may be provided as an L-shaped frame structure in addition to the mono-frame or the U-shaped frame, and may be provided as various structures not described in the above-described examples.

The structure of the module case 200 may be provided in the form that is open along the longitudinal direction of the battery cell stack 100. The front surface and the rear surface of the battery cell stack 100 may not be covered by the module case 200. The electrode leads 111, 112 of the battery cell 110 may not be covered by the module case 200. The front surface and the rear surface of the battery cell stack 100 may be covered by the busbar frame 300, the end plates 400, 450, or the busbars 310, 320 to be described below, and accordingly, the front surface and the rear surface of the battery cell stack 100 may be protected from external physical impacts and the like.

A compression pad 150 may be disposed between the battery cell stack 100 and one side surface of inner surfaces of the module case 200.

The compression pad 150 may be disposed so as to face the battery cell 110 located at an outermost side of the battery cell stack 100 in the X-axis direction in the drawing.

Also, a thermally conductive resin may be injected between the battery cell stack 100 and the inner surface of the module case 200, and a thermally conductive resin layer may be formed between the battery cell stack 100 and one side surface of the inner surfaces of the module case 200 by the injected thermally conductive resin. In such a case, the thermally conductive resin layer may be disposed on the Z-axis of the battery cell stack 100, and the thermally conductive resin layer may be formed between the battery cell stack 100 and the bottom surface of the module case 200 on the -Z-axis.

The busbar frame 300 may be disposed on one surface of the battery cell stack 100 and may cover one surface of the battery cell stack 100 while guiding connection between the battery cell stack 100 and an external device. The busbar frame 300 may be disposed on one surface of the battery cell stack 100, as illustrated, for example, the busbar frame 300 may be disposed on an upper surface, a lower surface, a front surface, a rear surface or a side surface of the battery cell stack 100. At least one of the busbars 310, 320 and a module connector may be provided on the busbar frame 300. As illustrated in FIG. 5, one surface of the busbar frame 300 may be connected to one side of the battery cell stack 100, and another surface of the busbar frame 300 may be connected to the busbars 310, 320.

The busbar frame 300 may include an electrically insulating material. The busbar frame 300 may restrict the busbars 310, 320 from contacting other portions of the battery cells 110 other than a portion where the busbars 310, 320 are connected to the electrode leads 111, 112 and may prevent an electrical short circuit from occurring.

The busbar frame 300 may be disposed on each of one side and another side of the battery cell stack 100.

The busbars 310, 320 may be provided on one surface of the busbar frame 300 and may serve to electrically connect the battery cell stack 100 or the battery cells 110 to an external device circuit. The busbars 310, 320 may be disposed between the battery cell stack 100 or the busbar frame 300 and the end plates 400, 450, thereby being protected from external impacts and the like and minimizing degradation of durability due to external moisture and the like.

The busbars 310, 320 may be electrically connected to the battery cell stack 100 through the electrode leads 111, 112 of the battery cell 110.

Specifically, the electrode leads 111, 112 of the battery cell 110 may be bent and connected to the busbars 310, 320 after passing through a lead slit formed in the busbar frame 300. The battery cells 110 constituting the battery cell stack 100 may be connected in series or in parallel by the busbars 310, 320.

The busbars 310, 320 may include a terminal busbar 320 configured to electrically connect one battery module 100 to another battery module 100. At least a portion of the terminal busbar 320 may be exposed to the outside of the end plates 400, 450 to be connected to another battery module 100, and to this end, the end plates 400, 450 may have a terminal opening 410.

The terminal busbar 320 may have one end portion a second portion 322 exposed through an opening 510 of the insulating cover 500 and the terminal opening 410 of the end plates 400, 450.

As illustrated in FIG. 7, the terminal busbar 320 may include a first portion 321 connected to the electrode leads 111, 112 of the battery cell 110 and the second portion 322 exposed to the outside through the terminal opening 410. In addition, the terminal busbar 320 may further include a bending portion 323 formed between the first portion 321 and the second portion 322.

In the terminal busbar 320, the first portion 321 may be connected to the second portion 322 through the bending portion, and one surface of the first portion 321 and one surface of the second portion 322 may be perpendicular to each other. That is, by forming the bending portion 323 that is bent in the terminal busbar 320, the second portion 322 may protrude such that the second portion 322 may be mounted on the mounting portion of the insulating cover 500 (a portion of the insulating cover 500 on which the second portion 322 is mounted), and the second portion 322 may be electrically connected to a busbar. A coupling hole 322a may be formed in the second portion 322 constituting one end portion of the terminal busbar 320, and the second portion 322 of the terminal busbar 320 may be fixed by a pin or a bolt inserted into the coupling hole 322a.

The end plates 400, 450 may be disposed on opposite sides of the module case 200 to cover one side surface and another side surface of the battery cell stack 100, and may include a first end plate 400 disposed on one side of the module case 200 and a second end plate 450 disposed on the opposite side of the module case 200.

Specifically, the first end plate 400 may be disposed on one side of the module case 200 where the terminal busbar 320 is disposed, and the second end plate 450 may be disposed on another side of the module case 200 opposite to the first end plate 400.

The first and second end plates 400, 450 may seal an open surface of the module case 200 to protect the battery cell stack 100 and electrical components connected thereto from external physical impact. To this end, the first and second end plates 400, 450 may be manufactured from a material having a predetermined strength, and for example, the first and second end plates 400, 450 may include a metal such as aluminum or a plastic material.

The first and second end plates 400, 450 may be formed with the terminal opening 410. The terminal opening 410 may be disposed on each of opposite sides of the first and second end plates 400, 450, and a portion of the insulating cover 500 and one end portion (the second portion 322) of the terminal busbar 320 may be exposed through the terminal opening 410.

The terminal busbar 320 may not be disposed on another side of the module case 200 where the second end plate 450 is disposed.

In addition, a connector opening may be positioned between the terminal openings 410 located on opposite sides of the first and second end plates 400, 450, and a module connector may be exposed to the outside through the connector opening.

In addition, module mounting portions 420, 470 may be disposed on left and right sides of the first and second end plates 400, 450.

The module mounting portions 420, 470 may be configured to fix the battery module 1000 in the battery pack 2000, and may include coupling holes 421, 471 that penetrate in the vertical (up and down) direction. A module mounting bolt may be coupled to the coupling holes 421, 471 such that the battery module 1000 may be fixed in the battery pack 2000. The module mounting portions 420, 470 may be formed integrally with the first and second end plates 400, 450.

A module lifting hole 430 may be formed in the module mounting portions 420, 470. The module lifting hole 430 is for lifting or transporting the battery module 1000, and a transport member may be coupled to the module lifting hole 430 to lift the battery module 1000. The battery module 1000 may be transported or the battery module 1000 may be assembled to the battery pack 2000 while the battery module 1000 is lifted by the transport member.

The module lifting hole 430 may be formed to a predetermined depth in a front surface of the module mounting portions 420, 470 or a front surface 401 of the first and second end plates 400, 450, and may communicate with the coupling holes 421, 471.

The first and second end plates 400, 450 may be coupled to the module case 200 while covering the busbar frame 300 or the busbars 310, 320 located on one surface of the battery cell stack 100. Each corner of the first and second end plates 400, 450 may be coupled to a corresponding corner of the module case 200 by a method such as welding, bolting, or hook coupling.

The first and second end plates 400, 450 may be respectively positioned on the front surface and the rear surface of the module case 200 to cover the front and rear surfaces of the battery cell stack 100.

The insulating cover 500 for electrical insulation may be positioned between the first and second end plates 400, 450 and the busbar frame 300. That is, the busbar frame 300, the insulating cover 500, and the first and second end plates 400, 450 may be positioned sequentially from the battery cell stack 100 outward. Like the first and second end plates 400, 450, the busbar frame 300 and the insulating cover 500 may each be configured in plural.

The insulating cover 500 may include an electrically insulating material and may block the busbars 310, 320 from contacting the first and second end plates 400, 450 .

The insulating cover 500 may include the opening 510 and the mounting portion on which the second portion 322 of the terminal busbar 320 is mounted. The opening 510 may be disposed on each of opposite sides of an upper portion of the insulating cover 500, and one end portion (the second portion 322) of the terminal busbar 320 may be exposed through the opening 510.

In addition, a connector opening may be positioned between the openings 510 located on the opposite sides of the insulating cover 500, and a module connector may be exposed to the outside through the connector opening.

The insulating cover 500 may be positioned on an inner surface of the first and second end plates 400, 450 and may be in close contact with the inner surface of the first and second end plates 400, 450, but this is not necessarily the case.

As described above, one end portion (the second portion 322) of the terminal busbar 320 may be exposed through the opening 510, and the exposed one end portion of the terminal busbar 320 may be mounted on the mounting portion. Accordingly, the mounting portion may be disposed adjacent to the opening 510 and may be disposed on an upper outer surface.

The mounting portion may allow the second portion 322 of the terminal busbar 320 to be mounted on its upper surface, and thus the upper surface of the mounting portion may form a mounting surface. In addition, the mounting portion may include a fixing portion configured to fix the second portion 322 of the terminal busbar 320, and the fixing portion may include a fixing groove into which a pin, a bolt, and the like inserted into the coupling groove 322a formed in the second portion 322 of the terminal busbar 320 is coupled and fixed.

In addition, the insulating cover 500 may include an edge portion positioned on an outside of the mounting portion where one end portion of the terminal busbar 320 is mounted at a portion exposed through the terminal opening 510.

In addition, a terminal cover portion that covers the exposed one end portion of the terminal busbar 320 may be disposed on the insulating cover 500.

The flame prevention member 600 serves to suppress flames from being exposed (spreading) to the outside when the flames occur inside the battery module 1000, and may include a first flame prevention member 610 and a second flame prevention member 650, as illustrated in FIGS. 3 and 4.

The first flame prevention member 610 may be disposed on the first end plate 400. The insulating cover 500 may be disposed, on the inside of the first end plate 400 where the first flame prevention member 610 is disposed, such that one end portion of the terminal busbar 320 is exposed.

Specifically, the first flame prevention member 610 may include a side portion 620 disposed on the first end plate 400 disposed on one side of the module case 200 and an upper portion 630 disposed on the upper surface of the battery module 1000.

The side portion 620 of the first flame prevention member 610 may be disposed on the first end plate 400 and may be disposed to cover an upper portion of the front surface 401 of the first end plate 400.

The side portion 620 may include a lower portion 621 and an upper portion 622 disposed above the lower portion 621.

The lower portion 621 of the side portion 620 may extend left and right to the module mounting portion 420 to cover the module mounting portion 420. In addition, a coupling hole 621a may be formed on each opposite side of the lower portion 621, and a fixing pin 623 may be inserted into the coupling hole 621a.

The first flame prevention member 610 may be coupled to the first end plate 400 by the fixing pin 623 inserted into the coupling hole 621a.

Meanwhile, the module lifting holes 430 may be formed on opposite sides of the first end plate 400 as described above, and the fixing pin 623 may be coupled to the module lifting holes 430 so that the first flame prevention member 610 may be fixed to the first end plate 400. In this way, since the first flame prevention member 610 may be fixed to the first end plate 400 by the fixing pin 623, it may be firmly fixed, and accordingly, the first flame prevention member 610 may be suppressed from being separated from the battery module 1000 by a high-pressure gas emission when a thermal runaway or a flame occurs in the battery module 1000.

The fixing pin 623 may be pressed and fixed into the module lifting hole 430.

Since the fixing pin 623 is coupled to the module lifting hole 430, there is no need to form a separate coupling groove or coupling hole for coupling the fixing pin 623.

In order to suppress interference between the fixing pin 623 and a module mounting bolt coupled to the coupling hole 421 of the module mounting portion 420, an end portion of the fixing pin 623 inserted into the module lifting hole 430 may be located in the module lifting hole 430 and may not be located in the coupling hole 421 of the module mounting portion 420. In order to suppress interference with the module mounting bolt, a length of the fixing pin 623 can be 5 mm or less.

The upper portion 622 of the side portion 620 may be formed to be narrower than the lower portion 621 and may not cover the module mounting portion 420. The upper portion 622 may cover the front portion of the insulating cover 500 exposed through the terminal openings 410 on opposite sides of the first end plate 400 and may cover one end portion (the second portion 322) of the terminal busbar 320 from the front.

The upper portion 630 may be disposed on the upper surface of the battery module 1000, and may be disposed on the upper surface of the first end plate 400, the upper surface of the insulating cover 500, and the upper surface 201 of the module case 200.

The upper portion 630 may extend by being bent from the side portion 620 toward the upper surface 201 of the module case 200, and may be formed integrally with the side portion 620. Accordingly, the first flame prevention member 610 may be formed in an inverted 'L' shape.

The upper portion 630 may be formed to have a narrower width than the upper portion 622 of the side portion 620, and may be positioned between the terminal busbars 320 on a plane. The connection of the busbars 320 between modules may be made by connecting a pack busbar between the terminal busbars 320 (see FIG. 9), and in order to secure space for the connection of the busbars 320 between modules, the upper portion 630 may not cover the terminal busbars 320 exposed on the insulating cover 500.

The upper portion 630 may extend toward the upper surface 201 of the module case 200 to cover the upper surface of the first end plate 400, the upper surface of the insulating cover 500, and a portion of the upper surface 201 of the module case 200.

Accordingly, as the first flame prevention member 610 has the configuration as described above, even if a flame occurs inside the battery module 1000, flames may be suppressed from being exposed (spreading) through the insulating cover 500, which is a plastic injection molded product vulnerable to high temperatures, and the flames may be suppressed from being exposed (spreading) between the module case 200 and the first end plate 400 (or the insulating cover 500).

The first flame prevention member 610 may be formed in a sheet form, and may include mica or be formed of a mica sheet.

The second flame prevention member 650 may be disposed on the second end plate 450 opposite to the first end plate 400.

Specifically, the second flame prevention member 650 may include a side portion 660 disposed on the second end plate 450 disposed on another side of the module case 200 and an upper portion 670 disposed on the upper surface of the battery module 1000.

The side portion 660 of the second flame prevention member 650 may be disposed on the second end plate 450 and may be disposed to cover the upper portion of the front surface of the second end plate 450.

The side portion 660 may include a lower portion 661 and an upper portion 662 disposed on an upper side of the lower portion 661.

The lower portion 661 of the side portion 660 may extend left and right to the module mounting portion 470 to cover the module mounting portion 470. In addition, a coupling hole 661a may be formed on each opposite side of the lower portion 661, and a fixing pin 663 may be inserted into the coupling hole 661a.

The second flame prevention member 650 may be coupled to the second end plate 450 by the fixing pin 663 inserted into the coupling hole 661a.

In the second flame prevention member 650, similar to the first flame prevention member 610, as the fixing pin 663 is coupled to the module lifting hole 480 formed in the front surface of the module mounting portion 470, the second flame prevention member 650 may be fixed to the second end plate 450. In this way, as the second flame prevention member 650 is fixed to the second end plate 450 by the fixing pin 663, it may be firmly fixed, and accordingly, the second flame prevention member 650 may be suppressed from being separated from the battery module 1000 by a high-pressure gas emission when a thermal runaway or a flame occurs in the battery module 1000.

The fixing pin 663 may be pressed and fixed to the module lifting hole 480.

As the fixing pin 663 is coupled to the module lifting hole 480, there is no need to form a separate coupling groove or coupling hole for coupling the fixing pin 663.

In order to suppress interference between the fixing pin 663 and a module mounting bolt coupled to the coupling hole 471 of the module mounting portion 470, an end portion of the fixing pin 663 inserted into the module lifting hole 480 may be positioned in the module lifting hole 480 and may not be positioned in the coupling hole 471 of the module mounting portion 470. In order to suppress interference with the module mounting bolt, a length of the fixing pin 663 can be 5 mm or less.

The upper portion 662 of the side portion 660 may be formed to have a narrower width than the lower portion 661 and may not cover the module mounting portion 470.

The upper portion 670 may be disposed on the upper surface of the battery module 1000, and may be disposed on the upper surface of the second end plate 450, the upper surface of the insulating cover 500, and the upper surface 201 of the module case 200.

The upper portion 670 may extend by being bent from the side portion 660 toward the upper surface 201 of the module case 200, and may be formed integrally with the side portion 660. Accordingly, the second flame prevention member 650 may be in a form that is bent in an inverted 'L' shape.

The upper portion 670 may extend toward the upper surface 201 of the module case 200 to cover the upper surface of the second end plate 450, the upper surface of the insulating cover 500, and a portion of the upper surface 201 of the module case 200.

The upper portion 670 may have the same width as the upper portion 662 of the side portion 660 and may include an extension 675 disposed on the upper surface 201 of the module case 200. The extension 675 may be disposed on the upper surface 201 of the module case 200 and may extend in width from the upper portion 670 so that left and right end portions of the extension 675 may extend to an edge of the upper surface 201 of the module case 200. Accordingly, a width of the extension 675 may be the same as the upper surface 201 of the module case 200.

As the second flame prevention member 650 has the configuration as described above, even if a flame occurs inside the battery module 1000, flames may be suppressed from being exposed (spreading) through the insulating cover 500, which is a plastic injection molded product vulnerable to high temperatures, and the flames may be suppressed from being exposed (spreading) between the module case 200 and the second end plate 450 (or the insulating cover 500).

Similar to the first flame prevention member 610, the second flame prevention member 650 may be formed in a sheet form and may include mica or be formed of a mica sheet.

Meanwhile, one or more battery modules 1000 according to the present disclosure as described above may form a battery pack 2000. The battery pack 2000 according to the present disclosure may accommodate at least one or more battery modules 1000 inside a pack case, and may include various control and protection systems such as a BMS (Battery Management System), a cooling system, and the like.

FIG. 9 is a view illustrating an inside of a battery pack 2000 according to the present disclosure, illustrating eight battery modules 1000 disposed on a pack tray 2100. A pack case accommodating the battery modules 1000 may include the pack tray 2100 and a pack cover coupled to an upper portion of the pack tray 2100. As illustrated, the battery pack 2000 according to the present disclosure may accommodate the plurality of battery modules 1000, and as an example, may accommodate eight battery modules 1000 as illustrated in FIG. 9.

In addition, the battery modules 1000 in the battery pack 2000 may be disposed so that front surfaces of the battery modules 1000 where the terminal busbars 320 are disposed may face each other. That is, four battery modules 1000 may be disposed on each left and right side in the battery pack 2000 so that the first flame prevention members 610 may face each other, and the second flame prevention member 650 may be disposed on the rear surface of each battery module 1000.

As such, as the first flame prevention members 610 may each be disposed on the front surfaces of the battery modules 1000 facing each other in the battery pack 2000, the first flame prevention members 610 facing each other may suppress flames from being emitted to the outside and cover the terminal busbar 320 from the front, thereby improving safety.

As illustrated, the connection of the terminal busbars 320 between the battery modules 1000 may be made by a pack busbar.

The battery module 1000 and the battery pack 2000 according to the present disclosure configured as described above may be applied to various devices. Specifically, it may be applied to means of transportation such as electric bicycles, electric vehicles, and hybrid vehicles, or (ESS) Energy Storage System, but the various devices are not limited thereto, and it may be applied to various devices that may use secondary batteries.

The present disclosure has been described with reference to embodiments as described above, but the present disclosure is not limited to the above embodiments, and various changes and modifications may be made by those skilled in the art within the scope that does not depart from the spirit of the present disclosure.

### [INDUSTRIAL APPLICABILITY]

The present disclosure may provide a battery module and a battery pack in which flames may be suppressed from being exposed to the outside even if the flames occur inside the battery module.

## Claims

1. A battery module comprising:
a battery cell stack in which a plurality of battery cells are stacked;
a module case configured to accommodate the battery cell stack;
a first end plate disposed on one side of the module case; and
a first flame prevention member disposed on the first end plate to suppress flame exposure to an outside of the battery module.

2. The battery module according to claim 1, wherein the first flame prevention member comprises:
a side portion disposed on the first end plate; and
an upper portion bent from the side portion and disposed on an upper surface of the battery module.

3. The battery module according to claim 2, wherein the first flame prevention member further comprises a fixing pin configured to fix the first flame prevention member to the battery module.

4. The battery module according to claim 3, wherein the side portion includes a coupling hole into which the fixing pin is inserted.

5. The battery module according to claim 4, wherein the fixing pin is coupled to the first end plate.

6. The battery module according to claim 5, wherein the first end plate includes a module lifting hole configured to be used to lift the battery module, and
the fixing pin is coupled to the module lifting hole.

7. The battery module according to claim 4, wherein the coupling hole is provided in plural and is disposed on opposite sides of the side portion, and
the fixing pin is provided in plural and is inserted into each coupling hole.

8. The battery module according to claim 7, wherein the first end plate comprises, on opposite sides, module lifting holes configured to be used to lift the battery module, and
the fixing pin is coupled to each of the module lifting holes.

9. The battery module according to claim 8, wherein the first end plate comprises, on opposite sides, a module mounting portion configured to couple the battery module to a battery pack, and
the module lifting hole is formed in the module mounting portion.

10. The battery module according to claim 9, wherein the module mounting portion includes a coupling hole formed in an up and down direction.

11. The battery module according to claim 1, further comprising
a second end plate disposed on another side of the module case; and
a second flame prevention member disposed on the second end plate to suppress flame exposure to the outside of the battery module.

12. The battery module according to claim 11, wherein the second flame prevention member comprises:
a side portion disposed on the second end plate; and
an upper portion bent from the side portion and disposed on an upper surface of the battery module.

13. The battery module according to claim 12, wherein the second flame prevention member further comprises a fixing pin configured to fix the second flame prevention member to the battery module.

14. The battery module according to claim 13, wherein the side portion of the second flame prevention member includes a coupling hole into which the fixing pin of the second flame prevention member is inserted.

15. The battery module according to claim 14, wherein the fixing pin of the second flame prevention member is coupled to the second end plate.

16. The battery module according to claim 15, wherein the second end plate includes a module lifting hole configured to be used to lift the battery module, and
the fixing pin is coupled to the module lifting hole.

17. The battery module according to claim 14, wherein the coupling hole is provided in plural and is disposed on opposite sides of the side portion, and
the fixing pin is provided in plural and is inserted into each coupling hole.

18. The battery module according to claim 17, wherein the second end plate comprises, on opposite sides, module lifting holes configured to be used to lift the battery module, and
the fixing pin is coupled to each of the module lifting holes.

19. The battery module according to claim 18, wherein the second end plate comprises, on opposite sides, a module mounting portion configured to couple the battery module to a battery pack, and
the module lifting hole is formed in the module mounting portion.

20. The battery module according to claim 19, wherein the module mounting portion includes a coupling hole formed in an up and down direction.
